# EUROPEAN PATENT APPLICATION

(11) **EP 3 435 312 A1**
(43) Date of publication of application: **30.01.2019**
(21) Application number: 17205706.9
(22) Date of filing: 06.12.2017
(51) Int. Cl.: G06Q 30/00, G06Q 10/08, G06Q 30/06

(54) **AUTHENTICITY DETERMINATION SYSTEM, SERVER AND ITS OPERATING METHOD, TERMINAL AND ITS OPERATING METHOD, AND PROGRAM**

(30) Priority: 28.07.2017 JP 2017146902
(71) Applicant: Tamba Trading Co., Ltd., Tokyo 114-0001 (JP)
(72) Inventor: TAMBA, Ken, TOKYO, 1140001 (JP)
(74) Representative: GIE Innovation Competence Group

(57) **Abstract**

The consumer terminal 3 includes an identification information acquisition unit 46 configured to acquire unique identification information 21 associated with the product, an identification information transmission unit 47, and an authenticity determination information reception unit 48.The server 2 includes a product management data storage unit 12 configured to store product management data 20 associating the identification information 21 with sell-off information 28 indicating whether the product associated with the identification information 21 has not yet been sold to an end consumer or has already been sold to an end consumer, an identification information reception unit 14, an authenticity determination information generation unit 15 configured to generate the authenticity determination information based on the sell-off information 28 associated with the received identification information 21, and an authenticity determination information transmission unit 16 configured to transmit the authenticity determination information to the consumer terminal 3.

## Description

### BACKGROUND

The present disclosure relates to an authenticity determination system, a server and its operating method, a terminal and its operating method, and a program.

In recent years, imitations have been increasingly circulated all over the world. While the amount of damage they have caused is undoubtedly increasing, their types have also been diversified. As imitations are continuously circulated, sales of authentic products and the value of their brands could be reduced. Therefore, taking measures against imitations has become an imminent challenge that should be tackled by companies.

To meet the above-described need, Patent Literature 1 (Japanese Unexamined Patent Application Publication No. 2017-21235) discloses a label for authenticity determination using refraction of light called a hologram.

### SUMMARY

However, the present inventors have found the following problem. That is, in the technique disclosed in the aforementioned Patent Literature 1, once counterfeit labels that are identical to labels stuck on authentic products are manufactured, it is impossible to prevent imitations of the authentic products from being circulated.

Therefore, an object of the present disclosure is to provide a new authenticity determination technique.

A first exemplary aspect is an authenticity determination system for determining authenticity of a product, including a terminal and a server, in which the terminal includes: an identification information acquisition unit configured to acquire unique identification information associated with the product; an identification information transmission unit configured to transmit the identification information to the server; and an authenticity determination information reception unit configured to receive authenticity determination information from the server, and the server includes: a product management data storage unit configured to store product management data associating the identification information with sell-off information indicating whether the product associated with the identification information has not yet been sold to an end consumer or has already been sold to an end consumer; an identification information reception unit configured to receive the identification information from the terminal; an authenticity determination information generation unit configured to generate the authenticity determination information based on the sell-off information associated with the received identification information; and an authenticity determination information transmission unit configured to transmit the authenticity determination information to the terminal.

A second exemplary aspect is a server for determining authenticity of a product, including: a product management data storage unit configured to store product management data associating unique identification information with sell-off information, the unique identification information being associated with the product, the sell-off information indicating whether the product associated with the identification information has not yet been sold to an end consumer or has already been sold to an end consumer; an identification information reception unit configured to receive the identification information from a terminal; an authenticity determination information generation unit configured to generate authenticity determination information based on the sell-off information associated with the received identification information; and an authenticity determination information transmission unit configured to transmit the authenticity determination information to the terminal.

A third exemplary aspect is a method for operating a server for determining authenticity of a product, including: a product management data storing step of storing product management data associating unique identification information with sell-off information, the unique identification information being associated with the product, the sell-off information indicating whether the product associated with the identification information has not yet been sold to an end consumer or has already been sold to an end consumer; an identification information receiving step of receiving the identification information from a terminal; an authenticity determination information generating step of generating authenticity determination information based on the sell-off information associated with the received identification information; and an authenticity determination information transmitting step of transmitting the authenticity determination information to the terminal.

A fourth exemplary aspect is a terminal for determining authenticity of a product, including: an identification information acquisition unit configured to acquire unique identification information associated with the product; an identification information transmission unit configured to transmit the identification information to a server, the server including a product management data storage unit configured to store product management data associating the identification information with sell-off information indicating whether the product associated with the identification information has not yet been sold to an end consumer or has already been sold to an end consumer; and an authenticity determination information reception unit configured to receive authenticity determination information from the server, the server being configured to generate the authenticity determination information based on the sell-off information associated with the identification information transmitted to the server.

A fifth exemplary aspect is a method for operating a terminal for determining authenticity of a product, including: an identification information acquiring step of acquiring unique identification information associated with the product; an identification information transmitting step of transmitting the identification information to a server, the server including a product management data storage unit configured to store product management data associating the identification information with sell-off information indicating whether the product associated with the identification information has not yet been sold to an end consumer or has already been sold to an end consumer; and an authenticity determination information receiving step of receiving authenticity determination information from the server, the server being configured to generate the authenticity determination information based on the sell-off information associated with the identification information transmitted to the server.

According to the present disclosure, it is possible to provide a new authenticity determination technique.

The above and other objects, features and advantages of the present invention will become more fully understood from the detailed description given hereinbelow and the accompanying drawings which are given by way of illustration only, and thus are not to be considered as limiting the present invention.

### BRIEF DESCRIPTION OF DRAWINGS

Fig. 1 is a schematic diagram of an authenticity determination system;
Fig. 2 is a functional block diagram of a server;
Fig. 3 is a table showing a data structure of product management data;
Fig. 4 is a functional block diagram of a consumer terminal;
Fig. 5 is a functional block diagram of a POS (Point-Of-Sale) terminal;
Fig. 6 is a sequence diagram in the authenticity determination system;
Fig. 7 is a sequence diagram in the authenticity determination system; and
Fig. 8 is a flowchart for generating authenticity determination information.

### DESCRIPTION OF EMBODIMENTS

Embodiments according to the present disclosure are explained hereinafter with reference to the drawings.

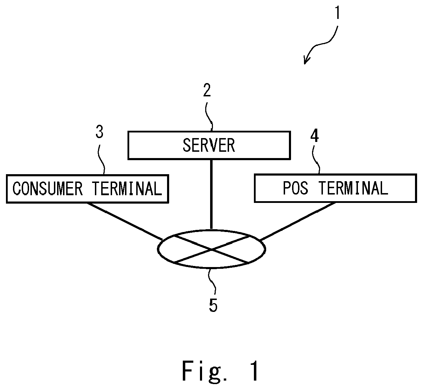

Fig. 1 shows a schematic diagram of an authenticity determination system 1. As shown in Fig. 1, the authenticity determination system 1 includes a server 2, a consumer terminal 3 as a terminal possessed by a consumer, and a POS (Point-Of-Sale) terminal 4 as a terminal installed in a counter of a retail store. However, the authenticity determination system 1 may include a plurality of servers 2 and thereby perform one or a plurality of processes by two or more servers 2 in a distributed manner. The authenticity determination system 1 may include a plurality of consumer terminals 3 or include only one consumer terminal 3. Alternatively, the authenticity determination system 1 may include no consumer terminal 3. The authenticity determination system 1 may include a plurality of POS terminals 4 or include only one POS terminal 4. Alternatively, the authenticity determination system 1 may include no POS terminal 4.

As shown in Fig. 1, the server 2, the consumer terminal 3, and the POS terminal 4 are configured so that, for example, they can communicate bidirectionally with each other through a network 5 such as the Internet.

### (Server 2)

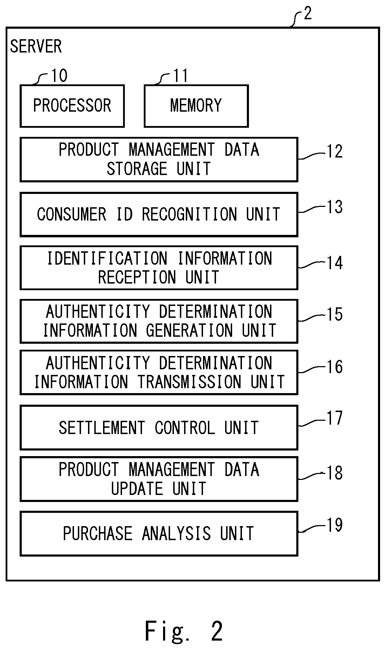

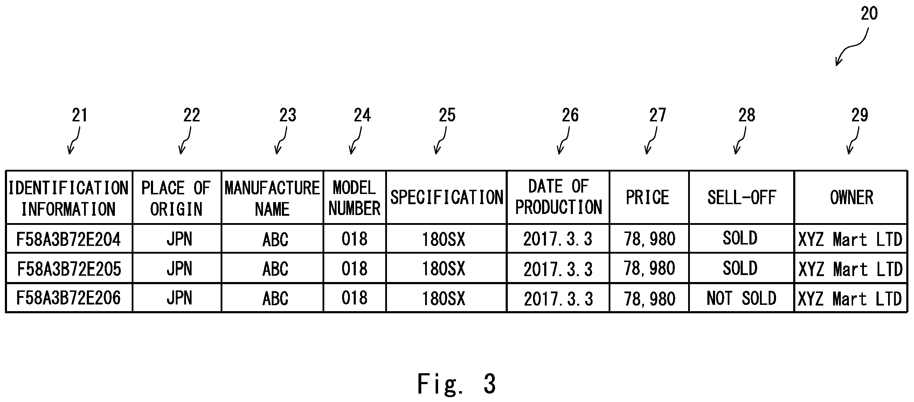

Next, the server 2 is explained with reference to Figs. 2 and 3.

As shown in Fig. 2, the server 2 includes a computer including a processor 10 and a memory 11. The memory 11 is composed of a non-volatile memory, a volatile memory, an HDD (Hard Disk Drive), or the like. In the memory 11, a server control program for controlling the server 2 is stored. As the server control program is loaded into the processor 10 and the processor 10 executes it, the server control program causes the computer including the processor 10 and the memory 11 to function as a product management data storage unit 12, a consumer ID recognition unit 13, an identification information reception unit 14, an authenticity determination information generation unit 15, an authenticity determination information transmission unit 16, a settlement control unit 17, a product management data update unit 18, and a purchase analysis unit 19. Note that at the technical level at the time of the filing of this application, the product management data storage unit 12 is implemented mainly by an HDD.

The product management data storage unit 12 stores product management data 20 shown in Fig. 3. As shown in Fig. 3, the product management data 20 contains identification information 21, place-of-origin information 22, manufacture name information 23, model number information 24, specification information 25, date-of-production information 26, price information 27, sell-off information 28, and owner information 29 while they are associated with each other. That is, each of the place-of-origin information 22, the manufacture name information 23, the model number information 24, the specification information 25, the date-of production information 26, the price information 27, the sell-off information 28, and the owner information 29 is associated with the identification information 21 in a one-to-one manner.

The identification information 21 is unique and one-and-only identification information for which no duplicate identification information exists anywhere in the world. Hence, two piece of the identification information 21 associated with exactly the same kind of two products inevitably differs from each other. Therefore, as shown in Fig. 3, there is a possibility that the same place of origin, the same manufacture name, the same model number, the same specification, the same date of production, or the same price could be associated with a plurality of pieces of mutually-different identification information 21. As an example, the identification information 21 could have an amount of information of about 10 kbits. At the technical level at the time of the filing of this application, the identification information 21 is associated with a product by disposing it in the product itself or an accessory of the product by using, for example, a QR-code label (Registered Trademark) or an RF tag or barcode label. Note that "the accessory of the product" means an item that is present for the product in a one-to-one relation and is distributed together with the product. For example, "the accessory of the product" means packaging in which the product is packaged, a price tag attached to the product or its packaging, or a label attached to the product or its packaging. The term "disposing" includes attaching, sticking, printing, and other means.

The place-of-origin information 22 indicates the place of origin of the product. The manufacture name information 23 indicates the name of the manufacturer (or the producer) of the product. The model number information 24 indicates the model number of the product. The specification information 25 indicates the specifications of the product. The date-of production information 26 indicates the date of production of the product. The price information 27 indicates the price of the product. Note that the price of the product indicted by the price information 27 means a manufacturer's recommended retail price determined by the manufacturer, an actual retail price in a store, or other prices.

The sell-off information 28 is information indicating whether the product associated with the identification information 21 has not yet been sold to an end consumer or has already been sold to an end consumer. In Fig. 3, "SOLD" indicates that the product associated with the identification information 21 has already been sold to an end consumer and "NOT SOLD" indicates that the product associated with the identification information 21 has not yet been sold to an end consumer. However, whether the product has not yet been sold or has already been sold may instead be expressed by simply using Boolean types, i.e., by using "TRUE" and "FALSE" or by simply using integer types, i.e., "1" and "0", instead of using "SOLD" and "NOT SOLD".

The owner information 29 is information indicating the current legitimate owner of the product associated with the identification information 21. Alternatively, the owner information 29 may be information indicating all the owners through the channel of distribution of the product, including the current legitimate owner of the product associated with the identification information 21, in a chronological order.

It should be noted that in the product management data 20, any of the place-of-origin information 22, the manufacture name information 23, the model number information 24, the specification information 25, the date-of-production information 26, the price information 27, and the owner information 29 may be omitted. That is, the product management data 20 may include only the identification information 21 and the sell-off information 28, or may include only the identification information 21, the sell-off information 28, and the owner information 29.

The consumer ID recognition unit 13 recognizes a consumer who has logged on the consumer terminal 3 by receiving a consumer ID transmitted from the consumer terminal 3.

The identification information reception unit 14 receives the identification information 21 from the consumer terminal 3.

The authenticity determination information generation unit 15 generates authenticity determination information based on the sell-off information 28 associated with the received identification information 21.

The authenticity determination information transmission unit 16 transmits the authenticity determination information generated by the authenticity determination information generation unit 15 to the consumer terminal 3.

The settlement control unit 17 controls a settlement (e.g., a payment) for the purchase/sale of the product.

The product management data update unit 18 updates the product management data 20.

The purchase analysis unit 19 analyzes the whole process of the commercial transaction.

### (Consumer Terminal 3)

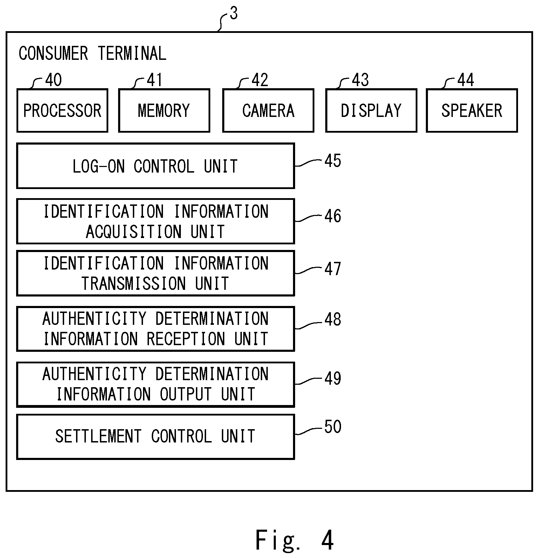

Next, the consumer terminal 3 is explained with reference to Fig. 4.

As shown in Fig. 4, the consumer terminal 3 includes a computer including a processor 40 and a memory 41, a camera 42, a display 43, and a speaker 44. The memory 41 is composed of a non-volatile memory, a volatile memory, an HDD (Hard Disk Drive), or the like. At the technical level at the time of the filing of this application, the memory 41 is composed of a non-volatile memory and a volatile memory in order to reduce the size and the weight of the consumer terminal 3. In the memory 41, a consumer terminal program for controlling the consumer terminal 3 is stored. As the consumer terminal program is loaded into the processor 40 and the processor 40 executes it, the consumer terminal program causes the computer including the processor 40 and the memory 41 to function as a log-on control unit 45, an identification information acquisition unit 46, an identification information transmission unit 47, an authenticity determination information reception unit 48, an authenticity determination information output unit 49, and a settlement control unit 50.

The log-on control unit 45 controls log-on of a consumer to the consumer terminal 3.

The identification information acquisition unit 46 acquires identification information disposed in the product itself or an accessory of the product. When the identification information is disposed in the product itself or an accessory of the product by using a QR-code label, the identification information acquisition unit 46 acquires the identification information through the camera 42. When the identification information is disposed in the product itself or an accessory of the product by using an RF tag, the identification information acquisition unit 46 acquires the identification information through near-field wireless communication means (not shown). When the identification information is disposed in the product itself or an accessory of the product by using a barcode label, the identification information acquisition unit 46 acquires the identification information through the camera 42 or a barcode reader. Note that the identification information may be disposed in the product itself or an accessory of the product by directly printing a barcode on the product itself or an accessory of the product.

The identification information transmission unit 47 transmits the identification information to the server 2.

The authenticity determination information reception unit 48 receives authenticity determination information from the server 2.

The authenticity determination information output unit 49 outputs the authenticity determination information through output means such as the display 43 and the speaker 44. Note that the authenticity determination information output unit 49 may output the authenticity determination information through, for example, a vibration motor that vibrates the consumer terminal 3, instead of through the display 43 or the speaker 44.

The settlement control unit 50 controls a settlement (e.g., a payment) for the purchase/sale of the product.

### (POS Terminal 4)

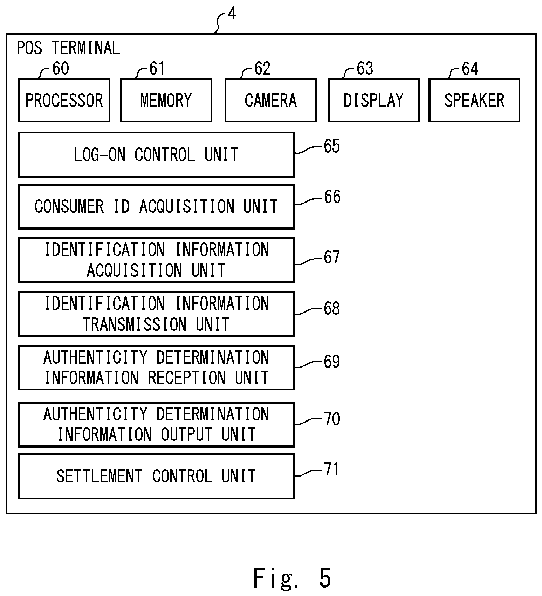

Next, the POS terminal 4 is explained with reference to Fig. 5.

As shown in Fig. 5, the POS terminal 4 includes a computer including a processor 60 and a memory 61, a camera 62, a display 63, and a speaker 64. The memory 61 is composed of a non-volatile memory, a volatile memory, an HDD (Hard Disk Drive), or the like. In the memory 61, a POS terminal program for controlling the POS terminal 4 is stored. As the POS terminal program is loaded into the processor 60 and the processor 60 executes it, the POS terminal program causes the computer including the processor 60 and the memory 61 to function as a log-on control unit 65, a consumer ID acquisition unit 66, an identification information acquisition unit 67, an identification information transmission unit 68, an authenticity determination information reception unit 69, an authenticity determination information output unit 70, and a settlement control unit 71.

The log-on control unit 65 controls log-on of a salesclerk to the POS terminal 4.

The consumer ID acquisition unit 66 acquires a consumer ID of a consumer.

The identification information acquisition unit 67 acquires identification information disposed in the product itself or an accessory of the product. When the identification information is disposed in the product itself or an accessory of the product by using a QR-code label, the identification information acquisition unit 67 acquires the identification information through the camera 62. When the identification information is disposed in the product itself or an accessory of the product by using an RF tag, the identification information acquisition unit 67 acquires the identification information through near-field wireless communication means (not shown). When the identification information is disposed in the product itself or an accessory of the product by using a barcode label, the identification information acquisition unit 67 acquires the identification information through the camera 62 or a barcode reader.

The identification information transmission unit 68 transmits the identification information to the server 2.

The authenticity determination information reception unit 69 receives authenticity determination information from the server 2.

The authenticity determination information output unit 70 outputs the authenticity determination information through output means such as the display 63 and the speaker 64.

The settlement control unit 71 controls a settlement for the purchase/sale of the product.

### (Sequence of Authenticity Determination System 1)

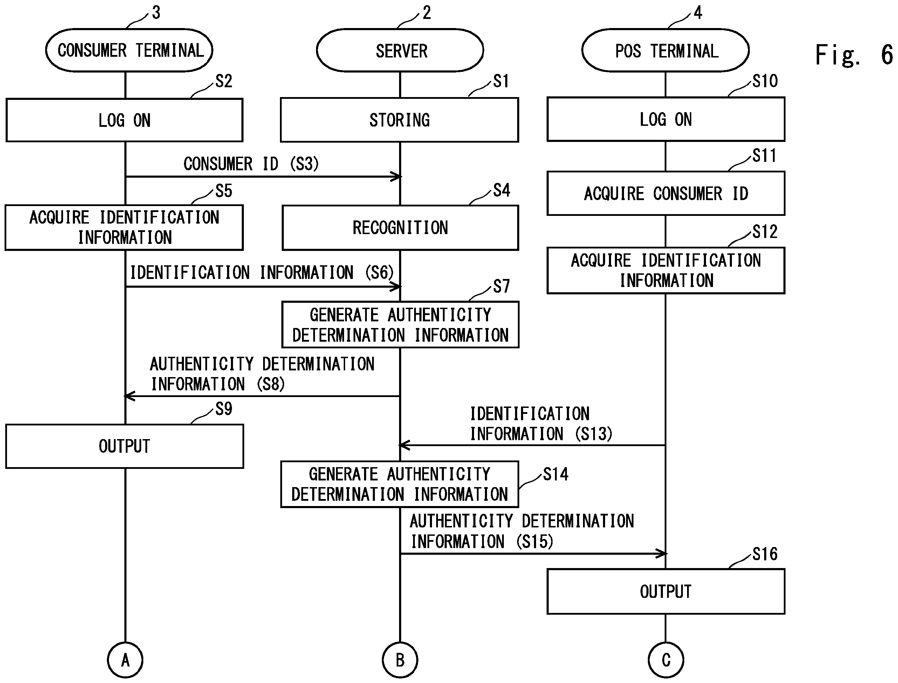

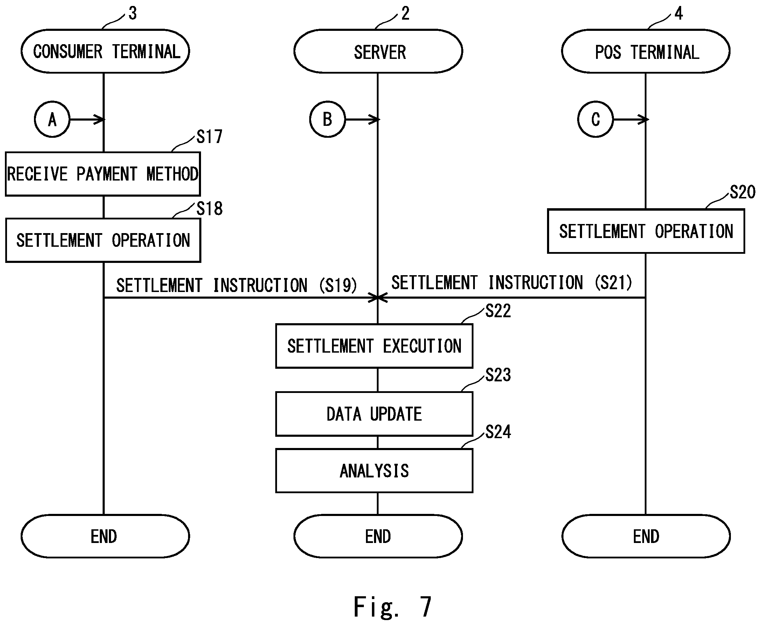

Next, a sequence performed by the authenticity determination system 1 is explained with reference to Figs. 6 to 8.

### S 1: Product Management Data Storing Step

Firstly, the product management data storage unit 12 of the server 2 stores product management data 20. Specifically, by an operation performed by an operator of the server 2, product management data 20 is entered into the server 2 and the product management data storage unit 12 stores the entered product management data 20.

Note that the product management data 20 is entered at the request of a manufacture that wants to prevent or stop the distribution of imitations. That is, a manufacture that wants to prevent the distribution of imitations disposes identification information in their products themselves or accessories of their products and requests a company in charge of the server 2 to enter or update the product management data 20 whenever necessary.

It should be noted that the current legitimate owner of a product could change during the distribution of the product. Therefore, the manufacture that wants to prevent the distribution of imitations appropriately keeps track of the distribution of their products. Further, whenever the current legitimate owner of their product changes, the manufacture requests the company in charge of the server 2 to enter or update the product management data 20 whenever necessary.

### S2-S3:

Next, a consumer starts, for example, an application program such as WeChat and performs a predetermined log-on operation in the consumer terminal 3. As a result, the log-on control unit 45 acquires a consumer ID and transmits the acquired consumer ID to the server 2.

### S4:

The consumer ID recognition unit 13 of the server 2 recognizes the consumer, who has logged on the consumer terminal 3, by receiving the consumer ID from the consumer terminal 3.

### S5: Identification Information Acquiring Step

Next, in order to verify the authenticity of a product that the consumer is considering purchasing (hereinafter referred to as "a product under consideration"), the consumer photographs a QR-code label disposed in the product under consideration itself or an accessory of the product under consideration by operating the camera 42 of the consumer terminal 3. In this way, the identification information acquisition unit 46 of the consumer terminal 3 decodes the photographed QR-code label and thereby acquires identification information of the product under consideration.

### S6: Identification Information Transmitting Step, Identification Information Receiving Step

Next, the identification information transmission unit 47 of the consumer terminal 3 transmits the identification information acquired by the identification information acquisition unit 46 to the server 2. The identification information reception unit 14 of the server 2 receives the identification information from the consumer terminal 3. Hereinafter, the identification information that the identification information reception unit 14 of the server 2 receives from the consumer terminal 3 is referred to as received identification information.

### S7: Outline of Authenticity Determination Information Generating Step

Next, the authenticity determination information generation unit 15 of the server 2 generates authenticity determination information based on sell-off information associated with the received identification information.

### S71-576: Detail of Authenticity Determination Information Generating Step

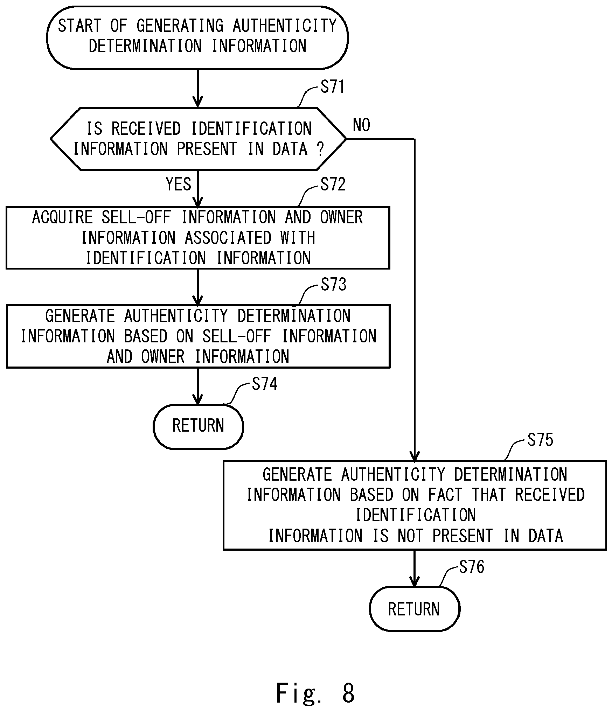

Fig. 8 shows an authenticity determination information generating step performed by the authenticity determination information generation unit 15 in detail. As shown in Fig. 8, firstly, the authenticity determination information generation unit 15 determines whether the received identification information is present in the product management data 20 (S71).

In the step S71, when the authenticity determination information generation unit 15 determines that the received identification information is present in the product management data 20 (S71: YES), it acquires sell-off information and owner information associated with the received identification information by referring to the product management data 20 (S72). Then, the authenticity determination information generation unit 15 generates authenticity determination information based on the acquired sell-off information and the owner information (S73) and returns to the sequence shown in Fig. 6 (S74). Note that the authenticity determination information may be information including the sell-off information and the owner information as they are, or may be information that is obtained by processing the sell-off information and the owner information. Alternatively, the authenticity determination information generation unit 15 may generate the authenticity determination information based solely on the sell-off information, instead of generating the authenticity determination information based on the sell-off information and the owner information.

In the step S71, when the authenticity determination information generation unit 15 determines that the received identification information is not present in the product management data 20 (S71: NO), it generates authenticity determination information based on the fact that the received identification information is not present in the product management data 20 (S75) and returns to the sequence shown in Fig. 6 (S76). In this case, the authenticity determination information is preferably information directly or indirectly indicating that the received identification information is not present in the product management data 20, such as Boolean type information "FALSE".

### S8: Authenticity Determination Information Transmitting Step, Authenticity Determination Information Receiving Step

Next, the authenticity determination information transmission unit 16 of the server 2 transmits the authenticity determination information generated by the authenticity determination information generation unit 15 to the consumer terminal 3. The authenticity determination information reception unit 48 of the consumer terminal 3 receives the authenticity determination information from the server 2.

### S9: Authenticity Determination Information Outputting Step

Then, the authenticity determination information output unit 49 of the consumer terminal 3 outputs the received authenticity determination information to the display 43. Specifically, the authenticity determination information output unit 49 outputs (i.e., displays), based on the authenticity determination information, information on whether the product under consideration has not yet been sold to an end consumer or has already been sold to an end consumer by using text, symbols, figures, etc., in the display 43. In this way, the consumer can determine (i.e., find out) whether the product under consideration has not yet been sold to an end consumer or has already been sold to an end consumer. That is, when the product under consideration is displayed in a store even though it has already been sold to an end consumer, there is a high possibility that the product under consideration is an imitation. Therefore, the consumer can be skeptical about the authenticity of the product under consideration and hence can avoid purchasing the product under consideration. Consequently, it is possible to prevent imitations from being circulated.

Further, the authenticity determination information output unit 49 outputs (i.e., displays), based on the authenticity determination information, information on the current legitimate owner of the product under consideration by using text, symbols, figures, etc., in the display 43. In this way, the consumer can determine (i.e., find out) whether or not the current legitimate owner of the product under consideration is the retail store in which the product under consideration is displayed. When the current legitimate owner of the product under consideration is not the same as the retail store in which the product under consideration is displayed, there is a high possibility that the product under consideration is an imitation. Therefore, the consumer can be skeptical about the authenticity of the product under consideration and hence can avoid purchasing the product under consideration. Consequently, it is possible to prevent imitations from being circulated.

Further, the authenticity determination information output unit 49 outputs (i.e., displays), based on the authenticity determination information, information on whether or not the identification information associated with the product under consideration is present in the product management data 20 by using text, symbols, figures, etc., in the display 43. When the identification information associated with the product under consideration is not present in the product management data 20, there is a high possibility that the product under consideration is an imitation. Therefore, the consumer can be skeptical about the authenticity of the product under consideration and hence can avoid purchasing the product under consideration. Consequently, it is possible to prevent imitations from being circulated.

Next, a sequence performed in the POS terminal 4 is explained.

### S10:

Firstly, as a salesclerk performs a predetermined log-on operation in the POS terminal 4, the log-on control unit 65 acquires a salesclerk ID.

### S11:

Next, as the salesclerk performs a predetermined reading operation for the consumer terminal 3 in the POS terminal 4, the consumer ID acquisition unit 66 acquires a consumer ID.

### S12: Identification Information Acquiring Step

Next, in order to verify the authenticity of a product under consideration, the consumer or the salesclerk photographs a QR-code label disposed in the product under consideration itself or an accessory of the product under consideration by operating the camera 62 of the POS terminal 4. In this way, the identification information acquisition unit 67 of the POS terminal 4 decodes the photographed QR-code label and thereby acquires identification information of the product under consideration. Note that when an RF tag is used in place of the QR-code label, the consumer or the salesclerk reads information recorded in the RF tag disposed in the product under consideration itself or an accessory of the product under consideration by operating an RF communication device or the like of the POS terminal 4 in order to verify the authenticity of the product under consideration. Note that when a barcode label is used in place of the QR-code label, the consumer or the salesclerk reads information recorded in the barcode label disposed in the product under consideration itself or an accessory of the product under consideration by operating the camera 62 or a barcode reader of the POS terminal 4 in order to verify the authenticity of the product under consideration. In this way, the identification information acquisition unit 67 of the POS terminal 4 acquires the identification information of the product under consideration.

### S13: Identification Information Transmitting Step, Identification Information Receiving Step

Next, the identification information transmission unit 68 of the POS terminal 4 transmits the identification information acquired by the identification information acquisition unit 67 to the server 2. The identification information reception unit 14 of the server 2 receives the identification information from the POS terminal 4. Hereinafter, the identification information that the identification information reception unit 14 of the server 2 receives from the POS terminal 4 is referred to as received identification information.

### S14: Authenticity Determination Information Generating Step

Next, the authenticity determination information generation unit 15 of the server 2 generates authenticity determination information based on sell-off information associated with the received identification information. Detailed operations performed by the authenticity determination information generation unit 15 are similar to the operations in the steps S71 to S76 shown in Fig. 8 and therefore their explanations are omitted.

### S15: Authenticity Determination Information Transmitting Step, Authenticity Determination Information Receiving Step

Next, the authenticity determination information transmission unit 16 of the server 2 transmits the authenticity determination information generated by the authenticity determination information generation unit 15 to the POS terminal 4. The authenticity determination information reception unit 69 of the POS terminal 4 receives the authenticity determination information from the server 2.

### S16: Authenticity Determination Information Outputting Step

Then, the authenticity determination information output unit 70 of the POS terminal 4 outputs the received authenticity determination information to the display 63. Specifically, the authenticity determination information output unit 70 outputs (i.e., displays), based on the authenticity determination information, information on whether the product under consideration has not yet been sold to an end consumer or has already been sold to an end consumer by using text, symbols, figures, etc., in the display 63. In this way, the consumer can determine (i.e., find out) whether the product under consideration has not yet been sold to an end consumer or has already been sold to an end consumer. That is, when the product under consideration is displayed in a store even though it has already been sold to an end consumer, there is a high possibility that the product under consideration is an imitation. Therefore, the consumer can be skeptical about the authenticity of the product under consideration and hence can avoid purchasing the product under consideration. Consequently, it is possible to prevent imitations from being distributed.

Further, the authenticity determination information output unit 70 outputs (i.e., displays), based on the authenticity determination information, information on the current legitimate owner of the product under consideration by using text, symbols, figures, etc., in the display 63. In this way, the consumer can determine (i.e., find out) whether or not the current legitimate owner of the product under consideration is the retail store in which the product under consideration is displayed. When the current legitimate owner of the product under consideration is not the same as the retail store in which the product under consideration is displayed, there is a high possibility that the product under consideration is an imitation. Therefore, the consumer can be skeptical about the authenticity of the product under consideration and hence can avoid purchasing the product under consideration. Consequently, it is possible to prevent imitations from being circulated.

A sequence that is performed by the authenticity determination system 1 when and after a consumer has determined to purchase a product under consideration is explained hereinafter.

### S17: Payment Method Receiving Step

Firstly, the settlement control unit 50 displays a plurality of methods for payment in the display 43 of the consumer terminal 3 in such a manner that a consumer can select one of the methods for payment. The consumer selects one of the plurality of methods for payment and enters his/her choice in the consumer terminal 3 by performing a predetermined operation.

Examples of the methods for payment include WeChat payment, Alipay, Baidu Wallet, Union Pay, Line Pay, and ordinary credit cards.

### S18-S19: Settlement Instructing Step

Next, the settlement control unit 50 of the consumer terminal 3 displays a settlement button in the display 43 of the consumer terminal 3. In response to this, as the consumer operates the settlement button (S18), the settlement control unit 50 transmits a settlement instruction to the server 2 (S19). Note that the settlement instruction that the settlement control unit 50 transmits to the server 2 includes the identification information of the product under consideration and a consumer ID.

### S20-S21: Settlement Instructing Step

At the same time, as the salesclerk operates a settlement button in the POS terminal 4 (S20), the settlement control unit 71 transmits a settlement instruction to the server 2 (S21). Note that the settlement instruction that the settlement control unit 71 transmits to the server 2 includes the identification information of the product under consideration, the consumer ID, a salesclerk ID, and a retail store ID.

### S22: Settlement Executing Step

When the settlement control unit 17 of the server 2 receives the settlement instruction from the consumer terminal 3 (S19) and receives the settlement instruction from the POS terminal 4 (S21), it performs a settlement process in which a predetermined amount of money is remitted from an account of the consumer to an account of the retail store directly or through an account of a settlement agent (S22). In this way, the purchase/sale of the product under consideration is settled between the consumer and the retail store and the settlement is completed.

### S23: Product Management Data Updating Step

Next, the product management data update unit 18 of the server 2 updates the sell-off information and the owner information of the product under consideration, i.e., the object for which the above-described settlement process has been carried out. That is, by the above-described settlement process, the product under consideration has already been sold to the end consumer. Therefore, the product management data update unit 18 updates the product management data 20 so that the sell-off information of the product under consideration is changed from "NOT SOLD" to "SOLD". In this way, the identification information related to the product under consideration is invalidated, so to speak, in the commercial transaction. Therefore, the function of guaranteeing the authenticity commercial transaction, which has been included in the identification information, is lost. Further, since the product under consideration has been transferred to the end consumer through the above-described settlement process, the product management data update unit 18 updates the product management data 20 so that the owner information indicating the current legitimate owner of the product under consideration is changed from "XYZ Mart LTD" to "CONSUMER" or "NULL".

### S24: Purchase Analyzing Step

Lastly, the purchase analysis unit 19 of the server 2 collects and analyzes information that is obtained through the above-described series of purchasing/selling processes. For example, the purchase analysis unit 19 analyzes a purchasing trend of each consumer, totals up sales results for each salesclerk, and so on. Further, the purchase analysis unit 19 provides purchase points to consumers.

Preferred embodiments according to the present disclosure have been described above. The above-described embodiments include the following features.

An authenticity determination system 1 for determining authenticity of a product includes a consumer terminal 3 (or a POS terminal 4) and a server 2. The consumer terminal 3 (or the POS terminal 4) includes an identification information acquisition unit 46 (an identification information acquisition unit 67) configured to acquire unique identification information 21 associated with the product, an identification information transmission unit 47 (an identification information transmission unit 68) configured to transmit the identification information 21 to the server 2, and an authenticity determination information reception unit 48 (an authenticity determination information reception unit 69) configured to receive authenticity determination information from the server 2. The server 2 includes a product management data storage unit 12 configured to store product management data 20 associating the identification information 21 with sell-off information 28 indicating whether the product associated with the identification information 21 has not yet been sold to an end consumer or has already been sold to an end consumer, an identification information reception unit 14 configured to receive the identification information 21 from the consumer terminal 3 (or the POS terminal 4), an authenticity determination information generation unit 15 configured to generate the authenticity determination information based on the sell-off information 28 associated with the received identification information 21, and an authenticity determination information transmission unit 16 configured to transmit the authenticity determination information to the consumer terminal 3 (or the POS terminal 4). By the above-described configuration, a consumer can determine authenticity of a product based on authenticity determination information through the consumer terminal 3 (or the POS terminal 4). Specifically, when the product has already been sold to an end consumer, the consumer can determine that the product is an imitation.

Note that the terminal included in the authenticity determination system 1 may be the consumer terminal 3 or may be the POS terminal 4. Alternatively, the authenticity determination system 1 may include both the consumer terminal 3 and the POS terminal 4.

When the received identification information 21 is not present in the product management data 20, the authenticity determination information generation unit 15 generates authenticity determination information based on the fact that the received identification information 21 is not present in the product management data 20. By the above-described configuration, a consumer can determine authenticity of a product based on authenticity determination information through the consumer terminal 3 (or the POS terminal 4). Specifically, when identification information 21 of a product is not present in the product management data 20, the consumer can determine that the product is an imitation.

The product management data 20 includes information on relevance between identification information 21 and owner information 29, which is information on a current legitimate owner of the product associated with the identification information 21. The authenticity determination information generation unit 15 generates authenticity determination information based on the sell-off information 28 and the owner information 29 associated with the received identification information 21. By the above-described configuration, a consumer can determine authenticity of a product based on authenticity determination information through the consumer terminal 3 (or the POS terminal 4). Specifically, when the current legitimate owner of the product is not the same as a retail store in which the product is displayed, the consumer can determine that the product is an imitation.

A server 2 for determining authenticity of a product includes a product management data storage unit 12 configured to store product management data 20 associating unique identification information 21 with sell-off information 28, the unique identification information 21 being associated with the product, the sell-off information 28 indicating whether the product associated with the identification information 21 has not yet been sold to an end consumer or has already been sold to an end consumer, an identification information reception unit 14 configured to receive the identification information 21 from the consumer terminal 3 (or the POS terminal 4), an authenticity determination information generation unit 15 configured to generate the authenticity determination information based on the sell-off information 28 associated with the received identification information 21, and an authenticity determination information transmission unit 16 configured to transmit the authenticity determination information to the consumer terminal 3 (or the POS terminal 4). By the above-described configuration, a consumer can determine authenticity of a product based on authenticity determination information through the consumer terminal 3 (or the POS terminal 4). Specifically, when the product has already been sold to an end consumer, the consumer can determine that the product is an imitation.

A method for operating a server 2 for determining authenticity of a product includes a product management data storing step (S1) of storing product management data 20 associating unique identification information 21 with sell-off information 28, the unique identification information 21 being associated with the product, the sell-off information 28 indicating whether the product associated with the identification information 21 has not yet been sold to an end consumer or has already been sold to an end consumer, an identification information receiving step (S6, S 13) of receiving the identification information 21 from a consumer terminal 3 (a POS terminal 4), an authenticity determination information generating step (S7, S14) of generating authenticity determination information based on the sell-off information 28 associated with the received identification information 21, and an authenticity determination information transmitting step (S8, S15) of transmitting the authenticity determination information to the consumer terminal 3 (the POS terminal 4). By the above-described configuration, a consumer can determine authenticity of a product based on authenticity determination information through the consumer terminal 3 (the POS terminal 4). Specifically, when the product has already been sold to an end consumer, the consumer can determine that the product is an imitation.

A consumer terminal 3 (a POS terminal 4) for determining authenticity of a product includes an identification information acquisition unit 46 (an identification information acquisition unit 67) configured to acquire unique identification information 21 associated with the product, an identification information transmission unit 47 (an identification information transmission unit 68) configured to transmit the identification information 21 to a server 2, the server 2 including a product management data storage unit 12 configured to store product management data 20 associating the identification information 21 with sell-off information 28 indicating whether the product associated with the identification information 21 has not yet been sold to an end consumer or has already been sold to an end consumer, and an authenticity determination information reception unit 48 (an authenticity determination information reception unit 69) configured to receive authenticity determination information from the server 2, the server being configured to generate the authenticity determination information based on the sell-off information 28 associated with the identification information 21 transmitted to the server 2. By the above-described configuration, a consumer can determine authenticity of a product based on authenticity determination information through the consumer terminal 3 (or the POS terminal 4). Specifically, when the product has already been sold to an end consumer, the consumer can determine that the product is an imitation.

A method for operating a consumer terminal 3 (a POS terminal 4) for determining authenticity of a product includes an identification information acquiring step (S5, S12) of acquiring unique identification information 21 associated with the product, an identification information transmitting step (S6, S 13) of transmitting the identification information 21 to a server 2, the server 2 including a product management data storage unit 12 configured to store product management data 20 associating the identification information 21 with sell-off information 28 indicating whether the product associated with the identification information 21 has not yet been sold to an end consumer or has already been sold to an end consumer, and an authenticity determination information receiving step (S8, S 15) of receiving authenticity determination information from the server 2, the server 2 being configured to generate the authenticity determination information based on the sell-off information 28 associated with the identification information 21 transmitted to the server 2. By the above-described configuration, a consumer can determine authenticity of a product based on authenticity determination information through the consumer terminal 3 (or the POS terminal 4). Specifically, when the product has already been sold to an end consumer, the consumer can determine that the product is an imitation.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. An authenticity determination system for determining authenticity of a product, comprising a terminal and a server, wherein
the terminal comprises:
an identification information acquisition unit configured to acquire unique identification information associated with the product;
an identification information transmission unit configured to transmit the identification information to the server; and
an authenticity determination information reception unit configured to receive authenticity determination information from the server, and
the server comprises:
a product management data storage unit configured to store product management data associating the identification information with sell-off information indicating whether the product associated with the identification information has not yet been sold to an end consumer or has already been sold to an end consumer;
an identification information reception unit configured to receive the identification information from the terminal;
an authenticity determination information generation unit configured to generate the authenticity determination information based on the sell-off information associated with the received identification information; and
an authenticity determination information transmission unit configured to transmit the authenticity determination information to the terminal.

2. The authenticity determination system according to Claim 1, wherein when the received identification information is not present in the product management data, the authenticity determination information generation unit generates the authenticity determination information based on the fact that the received identification information is not present in the product management data.

3. The authenticity determination system according to Claim 1 or 2, wherein
the product management data includes information on relevance between the identification information and owner information, the owner information being information on a current legitimate owner of the product associated with the identification information, and
the authenticity determination information generation unit generates the authenticity determination information based on the sell-off information and the owner information associated with the received identification information.

4. A server for determining authenticity of a product, comprising:
a product management data storage unit configured to store product management data associating unique identification information with sell-off information, the unique identification information being associated with the product, the sell-off information indicating whether the product associated with the identification information has not yet been sold to an end consumer or has already been sold to an end consumer;
an identification information reception unit configured to receive the identification information from a terminal;
an authenticity determination information generation unit configured to generate authenticity determination information based on the sell-off information associated with the received identification information; and
an authenticity determination information transmission unit configured to transmit the authenticity determination information to the terminal.

5. The server according to Claim 4, wherein when the received identification information is not present in the product management data, the authenticity determination information generation unit generates the authenticity determination information based on the fact that the received identification information is not present in the product management data.

6. The server according to Claim 4 or 5, wherein
the product management data includes information on relevance between the identification information and owner information, the owner information being information on a current legitimate owner of the product associated with the identification information, and
the authenticity determination information generation unit generates the authenticity determination information based on the sell-off information and the owner information associated with the received identification information.

7. A method for operating a server for determining authenticity of a product, comprising:
a product management data storing step of storing product management data associating unique identification information with sell-off information, the unique identification information being associated with the product, the sell-off information indicating whether the product associated with the identification information has not yet been sold to an end consumer or has already been sold to an end consumer;
an identification information receiving step of receiving the identification information from a terminal;
an authenticity determination information generating step of generating authenticity determination information based on the sell-off information associated with the received identification information; and
an authenticity determination information transmitting step of transmitting the authenticity determination information to the terminal.

8. A program for causing a computer to function as a server according to any one of Claims 4 to 6, or causing a computer to perform an operating method according to Claim 7.

9. A terminal for determining authenticity of a product, comprising:
an identification information acquisition unit configured to acquire unique identification information associated with the product;
an identification information transmission unit configured to transmit the identification information to a server, the server comprising a product management data storage unit configured to store product management data associating the identification information with sell-off information indicating whether the product associated with the identification information has not yet been sold to an end consumer or has already been sold to an end consumer; and
an authenticity determination information reception unit configured to receive authenticity determination information from the server, the server being configured to generate the authenticity determination information based on the sell-off information associated with the identification information transmitted to the server.

10. A method for operating a terminal for determining authenticity of a product, comprising:
an identification information acquiring step of acquiring unique identification information associated with the product;
an identification information transmitting step of transmitting the identification information to a server, the server comprising a product management data storage unit configured to store product management data associating the identification information with sell-off information indicating whether the product associated with the identification information has not yet been sold to an end consumer or has already been sold to an end consumer; and
an authenticity determination information receiving step of receiving authenticity determination information from the server, the server being configured to generate the authenticity determination information based on the sell-off information associated with the identification information transmitted to the server.

11. A program for causing a computer to function as a terminal according to Claim 9, or causing a computer to perform an operating method according to Claim 10.

12. A non-transitory computer readable media storing a program according to Claim 8 or 11.
